# EUROPÄISCHE PATENTANMELDUNG

(11) **EP 3 246 144 A1**
(43) Veröffentlichungstag der Anmeldung: **22.11.2017**
(21) Anmeldenummer: 17000870.0
(22) Anmeldetag: 19.05.2017
(51) Int. Cl.: B29C 44/58

(54) **VORRICHTUNG UND VERFAHREN ZUM SPRITZPRÄGEN EINES KUNSTSTOFFTEILS**

(30) Priorität: 20.05.2016 DE 102016006094
(71) Anmelder: Christian Karl Siebenwurst GmbH & Co. KG Modellbau & Formenbau, 92345 Dietfurt a. d. Altmühl (DE)
(72) Erfinder: GRAD, Johannes, 92345 Dietfurt a.d. Altmühl (DE)
(74) Vertreter: Samson & Partner Patentanwälte mbB

(57) **Zusammenfassung**

Eine Vorrichtung zum Spritzprägen eines Kunststoffteils umfasst eine Form mit einem Formunterteil und einem Formoberteil, zwischen welchen eine Kavität gebildet ist, wobei das Formoberteil mindestens einen die Kavität begrenzenden Schieber aufweist, und wobei ein Betätigungskeil zum Verschieben des Schiebers vorgesehen ist. Die Erfindung betrifft auch ein Verfahren zum Spritzprägen.

## Beschreibung

Die Erfindung betrifft eine Vorrichtung und ein Verfahren zum Herstellen eines Gegenstandes über Spritzguss, Druckguss oder als Teil welches im Pressverfahren hergestellt wird und bei dünner Wandstärke geprägt, gespritzt oder gegossen wird und im Werkzeug auf eine gleichmäßig definierte Wanddicke expandieren kann und die Maßhaltigkeit gegeben ist.

Die erfindungsgemäße Formvorrichtung und das erfindungsgemäße Verfahren zum Spritzen eines Gegenstandes mit der Möglichkeit bei dünner Wandstärke einzuspritzen und durch Ausnutzung der Expansion des Spritzmaterials, welche speziell chemisch oder physikalisch ermöglicht werden kann, auf die gewünschte Wandstärke durch einen Öffnungshub zu bringen. Bisherige Lösungen ermöglichen die Expansion nur in eine Richtung. Meist in der Öffnungsrichtung der SG- Maschine oder Presse.

Zum Formen eines Gegenstandes werden die Formoberseite und die Formunterseite über einen Schließmechanismus verschlossen. Speziell in diesem Fall ist das Werkzeug mit dünnerer Wanddicke ausgelegt, als der spätere Gegenstand nach dem Entformen aufweist.

Ein zunächst unförmiges Material wird in den Hohlraum eingebracht und geformt. Bei dem Material kann es sich beispielsweise um Granulat oder auch um eine Schmelze handeln. Zum Einbringen des Materials sind verschiedene Verfahren bekannt. Die Materialen können beispielsweise Metall oder Kunststoff umfassen.

Formvorrichtungen können beispielsweise beim Spritzgießen bzw. Spritzgussverfahren eingesetzt werden. Dieses Urformverfahren dient hauptsächlich zur Kunststoffverarbeitung. Dabei wird ein Kunststoffgranulat eingeschmolzen und die flüssige Kunststoffschmelze über Zufuhrleitungen in den verringerten Hohlraum eingespritzt. Das Spritzmaterial wird beim SGI- Verfahren mit chemischen Zusätzen, welche als Treibmittel wirken, behandelt. Beim Mucell- Verfahren (physikalisches Schäumen) wird Gas zugesetzt.

Nach dem Einspritzen wird das Werkzeug in Richtung Hauptentformung auf einen definierten Hub geöffnet. Der Hub ist über die Maschine steuerbar, es sind aber auch mechanische Lösungen zur Hubbestimmung möglich. Durch die Öffnung kann hier das Material gleichzeitig auf die gewünschte Wandstärke in allen Richtungen expandieren. Nach der anschließenden Kühlzeit wird das Werkzeug komplett geöffnet und das expandierte Bauteil kann nach dem Auswerfen entnommen werden.

Bei der nachfolgend beschriebenen erfindungsgemäßen Mechanik ist es möglich, mit dem Öffnungshub z.B. der SGM die Expansion in allen Richtungen auszuführen.

Als Beispiel wird der Vorgang von einer Expansion der Wandstärke von 2mm auf 3mm beschrieben.

Das auf die notwendige Temperatur gebrachte Werkzeug wird über die Maschine geschlossen. Der Hohlraum in der Kavität weist eine Dicke von 2mm auf. Zur Vereinfachung der Mechanik kann in bestimmten Bereichen bereits eine Wanddicke von 3 mm vorhanden sein. Über die Zuleitung bzw. den Heisskanal wird das aufgeschmolzene Granulat mit zugesetztem Treibmittel oder einer Gasinjektion in die Kavität eingespritzt. Kurz nach dem Einspritzen, die Kavität ist vollständig gefüllt, wird das Werkzeug über die Maschine auf eine definierte Weglänge geöffnet.

Durch dieses Öffnen wird die Expansion der Schmelze möglich. Damit die Expansion im Gegensatz zu herkömmlichen Verfahren in allen Richtungen expandieren kann, werden die Schieber (4) über einen Zugkeil (3) bewegt. Der Zugkeil (3) und der Schieber(4) verbleiben immer in der Formoberseite. Die Richtung des Schiebers relativ zum Bauteil wird über die Führungspinole (5) erreicht. Das Zufuhrsystem bzw. die Heisskanaldüsen (6) werden in Schieberrichtung eingebracht.

Beim Öffnen des Werkzeuges, in diesem Fall 1 mm wird in Richtung Hauptentformung die Dicke von 2mm auf 3 mm erreicht. Gleichzeitig fährt der Schieber (4), gezogen durch den Zugkeil (3) in Richtung der Pinole (5), dadurch öffnet sich auch in dieser Richtung die Wanddicke in der Kavität von 2mm auf 3mm. Der Schieberweg wird über die Winkel am Zugkeil (3) festgelegt.

Der Zugkeil (3) kann über die Formöffnung betätigt werden. Eine Bewegung ist auch hydraulisch und mit Federkraft möglich. Die Bewegung kann auch bei geschlossener Form ausgeführt werden. Eine Bewegung ist auch selbständig beim Öffnen des Werkzeuges durch den Druck in der Kavität möglich. Dazu müssen die Winkel am Zugkeil (3) und am Schieber (4) so ausgeführt werden, dass eine Eigenhemmung nicht gegeben ist.

### Entformung von Hinterschnitten:

Ein weiterer Vorteil besteht darin, dass die Schieber (4) auch Hinterschnitte am Bauteil entformen können. Durch die Mechanik kann beim endgültigen öffnen der Zugkeil (3) definiert weiter bewegt werden, welches einen Schieberhub zur notwendigen Entfomung des evtl. Hinterschnittes ermöglicht.

Die Schieber können umlaufend um das Werkzeug angebracht werden und in verschiedenen Richtungen, je nach Winkel der Pinole (5), gesteuert werden.

### Spritzprägen im 3D- Verfahren

Da das Einspritzen bei dünnen Wanddicken aufwendig ist, ist es mit diesem Prinzip auch möglich, bei großer Wanddicke in den Formhohlraum einzuspritzen. Dazu müssen in der Trennung gefederte Elemente angebracht werden, welche das Werkzeug trotz Öffnung(z.B. 3 mm) abdichten. Nach dem Einspritzen in der z.B. 3 mm geöffneten Form wird diese endgültig geschlossen und die Schmelze verteilt sich durch das Zusammenpressen gleichmäßig in der Kavität. Anschließend kann das Werkzeug wieder mit dem gewünschten Expansionshub geöffnet werden. Durch die Expansion wird die gewünschte Wanddicke am Bauteil erreicht.

Bekannt ist dieses Verfahren auch unter dem Begriff "Spritzprägen". Wobei bisher lediglich eine Prägung nur in der Hauptentformrichtung möglich war.

Die erfindungsgemäße Vorrichtung ermöglicht das gleichmäßige Schäumen eines Gegenstandes über dessen gesamte Wanddicke.

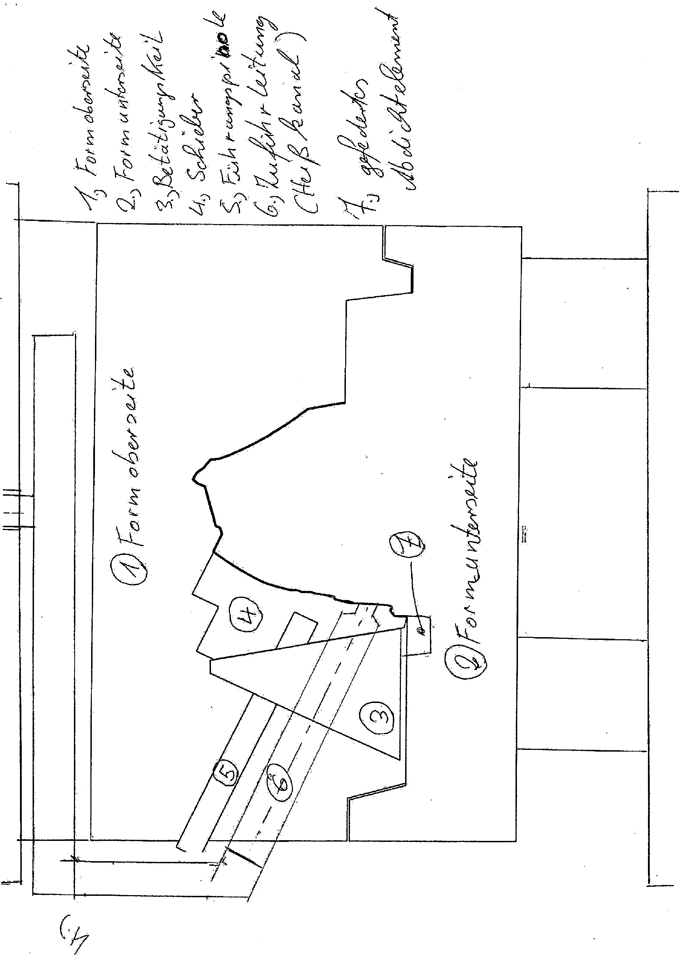

## Patentansprüche

1. Vorrichtung zum Spritzprägen eines Kunststoffteils, umfassend eine Form mit einem Formunterteil und einem Formoberteil, zwischen welchen eine Kavität gebildet ist, wobei das Formoberteil mindestens einen die Kavität begrenzenden Schieber aufweist, und wobei ein Betätigungskeil zum Verschieben des Schiebers vorgesehen ist.

2. Vorrichtung nach Anspruch 1, **dadurch gekennzeichnet, dass** der Schieber auf einer Führungspinole verschiebbar ist.

3. Vorrichtung nach Anspruch 1 oder 2, **gekennzeichnet durch** eine den Betätigungskeil durchdringende Heißkanaldüse.

4. Vorrichtung nach einem der Ansprüche 1 bis 3, **gekennzeichnet durch** ein das Formunterteil sowie den Schieber kontaktierendes Abdichtelement.

5. Vorrichtung nach Anspruch 4, **dadurch gekennzeichnet, dass** das Abdichtelement gegen den Schieber angefedert ist.

6. Verfahren zum Spritzprägen eines Kunststoffteils, mit folgenden Schritten:
- Eine Form mit einem Formunterteil und einem Formoberteil, zwischen welchen eine Kavität gebildet ist, wird bereitgestellt, wobei das Formoberteil mindestens einen die Kavität begrenzenden Schieber aufweist,
- in die Kavität wird Material, welches Kunststoff sowie ein treibendes Mittel, insbesondere ein festes oder flüssiges Treibmittel oder ein Gas, enthält, eingespritzt,
- nach der Verteilung des Materials in der Kavität wird diese durch Verlagerung des Formoberteils relativ zum Formunterteil in einer Hauptöffnungsrichtung um einen bestimmten Hauptöffnungsfaktor vergrößert,
- zusätzlich wird der Schieber innerhalb des Formoberteils in einer Nebenöffnungsrichtung, welche nicht mit der Hauptöffnungsrichtung übereinstimmt, verlagert, womit die Kavität in demjenigen Bereich, der durch den Schieber begrenzt ist, um einen Nebenöffnungsfaktor vergrößert wird,
- die vergrößerte Kavität wird durch Expansion des treibenden Mittels mit Material, welches sich verfestigt, ausgefüllt,
- das durch das verfestigte Material gebildete Kunststoffteil wird aus der Form entnommen.

7. Verfahren nach Anspruch 6, **dadurch gekennzeichnet, dass** die Nebenöffnungsrichtung mit der Hauptöffnungsrichtung einen Winkel von mehr als 60° einschließt.

8. Verfahren nach Anspruch 6 oder 7, **dadurch gekennzeichnet, dass** der Hauptöffnungsfaktor mindestens 1,3 und höchstens 2, insbesondere 1,5, beträgt.

9. Verfahren nach einem der Ansprüche 6 bis 8, **dadurch gekennzeichnet, dass** der Nebenöffnungsfaktor mindestens 1,3 und höchstens 2, insbesondere 1,5, beträgt.

10. Verfahren nach einem der Ansprüche 6 bis 9, **dadurch gekennzeichnet, dass** der Nebenöffnungsfaktor vom Hauptöffnungsfaktor um nicht mehr als 25%, insbesondere um nicht mehr als 10%, abweicht, insbesondere mit dem Hauptöffnungsfaktor identisch ist.
